# EUROPEAN PATENT APPLICATION

(11) **EP 1 167 119 A1**
(43) Date of publication of application: **02.01.2002**
(21) Application number: 00202134.3
(22) Date of filing: 19.06.2000
(51) Int. Cl.: B60P 3/36

(54) **Support for clothes in caravans**

(71) Applicant: De Vlam, H.J.G., 5406 XT Uden (NL)
(72) Inventor: De Vlam, H.J.G., 5406 XT Uden (NL)

(57) **Abstract**

The invention concerns a coatrack for caravans, campers and yachts.

The coatrack can be simply fixed by pushing or clicking it into the profile.

Besides, the device has the advantage of being an easy and reliable supplement to the caravan equipment.

## Description

The invention concerns a coatrack. The invention, referred to as coatrack can be mounted in the profiles that are fastened to the caravan by sliding or clicking in.

The profiles referred to have been mounted on all sides of the caravan. Consequently you can decide where you want to use the coatrack, either on one of the sides or on the front or on the back.

The assembly is quite simple. You just click or slide the clothesline holder, using the round part being fixed to the clothesline holder and being meant for the purpose, in the caravan profile.

## Claims

1. A coatrack, which can be mounted both left and right.

2. The coatrack can be pushed or clicked into the profile that has been fixed to the caravan. In this way you have a perfect and reliable device to hang one's coat on the peg, which is forming part of the caravan equipment.
